# EUROPÄISCHE PATENTSCHRIFT

(11) **EP 1 008 532 B1**
(45) Veröffentlichungstag und Bekanntmachung des Hinweises auf die Patenterteilung: **08.05.2002**
(21) Anmeldenummer: 99122596.2
(22) Anmeldetag: 12.11.1999
(51) Int. Cl.: B65D 63/10, H02G 3/36

(54) **Kunststoffhalteband zum Umschlingen, Haltern und Bündeln von Gegenständen, insbesondere von Rohren und Kabeln**
Bundle tie for binding, supporting and bundling articles, particularly pipes or cables
Collier de serrage pour le cerclage, fixation et bottelage d'objets, en particulier des tuyaux ou des câbles

(30) Priorität: 11.12.1998 DE 29822176 U
(43) Veröffentlichungstag der Anmeldung: 14.06.2000
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 583 554
- DE-U- 29 622 098
- US-A- 3 568 262
- US-A- 4 272 870
- US-A- 4 507 828
- US-A- 5 112 013
- US-A- 5 819 375

## Beschreibung

Die Erfindung bezieht sich auf ein Kunststoffhalteband zum Umschlingen, Haltern und Bündeln von Gegenständen, insbesondere von Rohren und Kabeln, mit einem profilierten Bandteil mit zwei parallelen Längsstegen und quer dazu angeordneten Sprossen, mit einem an das Bandteil anschließenden Kopfteil, welches innerhalb einer Durchgangsöffnung ein schräg verlaufendes, federndes Verriegelungselement aufweist, in welches mindestens ein Teilbereich einer Sprosse einlagerbar ist und mit einem mit einem Träger verbindbaren Halteteil.

Als Stand der Technik ist bereits ein derartiges Halteteil bekannt (DE-GM 297 07 757.0), bei welchem die Sprossen des Verriegelungselements eine besondere Ausbildung besitzen, um eine verbesserte Halterung des Bandteils innerhalb des Kopfteils zu ermöglichen.

Weiterhin sind Haltebänder bekannt (DE-OS 38 07 173), bei welchen die Sprossen einen kreisförmigen Querschnitt aufweisen oder oval ausgebildet sind (US-PS 3,991,444).

Bei allen vorgenannten Haltebändern kann sich die Situation ergeben, dass ein auf Längszug beanspruchter Gegenstand, beispielsweise ein Rohr oder Kabel, aus der Halterung gelöst wird, und zwar selbst dann, wenn der Außenumfang des betreffenden zu halternden Gegenstandes als sog. Wellrohr ausgebildet ist.

Entsprechend liegt der vorliegenden Erfindung die Aufgabe zugrunde, ein Halteband der eingangs genannten Art zu schaffen, welches speziell zur Halterung und axialen Sicherung der vorstehend genannten Wellrohre geeignet ist.

Diese Aufgabe wird erfindungsgemäß dadurch gelöst, dass zum Haltern mindestens eines Gegenstandes, welcher quer zur Längsrichtung über den Außenumfang gewellt ist, ein zwischen dem Kopfteil und dem Bandteil liegender Bereich mit mindestens einem in einer Ausnehmung der Wellung einlagerbaren Haltenocken versehen ist und dass in Schließstellung des Haltebandes das in den Bereich des zu halternden Gegenstandes ragende Verriegelungselement mit seiner Rückseite von diesem beaufschlagt und in eine den Teilbereich der eingelagerten Sprossen sperrende Stellung bewegt ist.

Der oder die Haltenocken sind in der Lage, durch Beaufschlagung des Außenumfangs des Wellrohres dieses in der funktionssicheren Position zu haltern, wobei andererseits das Wellrohr mit seinem Außenumfang auf die Rückseite des Verriegelungselements einwirkt und das gesamte Halteband einwandfrei an einem Träger in Schließstellung haltert. Damit ist eine hohe Funktionssicherheit des erfindungsgemäßen Haltebandes gegeben.

In weiterer Ausgestaltung der Erfindung kann der zwischen dem Bandteil und dem Kopfteil liegende Bereich mit einer zum gehaltenen Gegenstand gerichteten Wölbung versehen sein. Diese Wölbung kann eine größere Breite als die des Bandteils aufweisen.

Zur Verbesserung der Halterung können nach einem weiteren Merkmal der Erfindung zwei Haltenocken nebeneinander im Abstand der Wölbung vorgesehen sein, wobei sich vorteilhafterweise die Haltenocken an einer Seite der Wölbung befinden.

Das Bandteil kann zur weiteren gesicherten Halterung des Wellrohres in dem an die Wölbung angrenzenden Bereich mindestens einen weiteren Haltenocken aufweisen. Hierbei können beispielsweise zwei Haltenocken Anwendung finden, wobei die Haltenocken der Wölbung und die Haltenocken des Bauteils auf der selben Seite des Halteelements angeordnet sein können.

Nach einem anderen Merkmal der Erfindung kann die Wölbung unterhalb der von dem zu halternden Gegenstand beaufschlagbaren Rückseite des Verriegelungselements an das Kopfteil anschließen. Weiterhin kann das Verriegelungselement in einer Ausnehmung des Kopfteils angeordnet sein.

Nach einem weiteren Merkmal der Erfindung besteht die Möglichkeit, dass das Kopfteil und das Halteteil eine gemeinsame Baueinheit bilden. Hierbei kann das Halteteil zur Aufnahme eines Grobgewindebolzens ausgebildet sein, wobei weitere an sich bekannte Möglichkeiten bestehen, das Halteteil an einem beliebig geformten Träger zu befestigen.

Die Erfindung wird nachfolgend anhand von in der Zeichnung dargestellten Ausführungsbeispielen näher beschrieben. In der Zeichnung zeigen:
- Fig. 1: einen Schnitt nach der Linie I-I in Fig. 2 bezüglich eines Teils eines erfindungsgemäßen Halteelements;
- Fig. 2: eine Draufsicht auf das Halteteil nach Fig. 1;
- Fig. 3: eine vergrößerte Darstellung des Kopfteils und des Halteteils in Schließstellung des Haltebandes, teils gebrochen;
- Fig. 4: eine perspektivische Ansicht auf ein Halteelement nach der vorliegenden Erfindung.

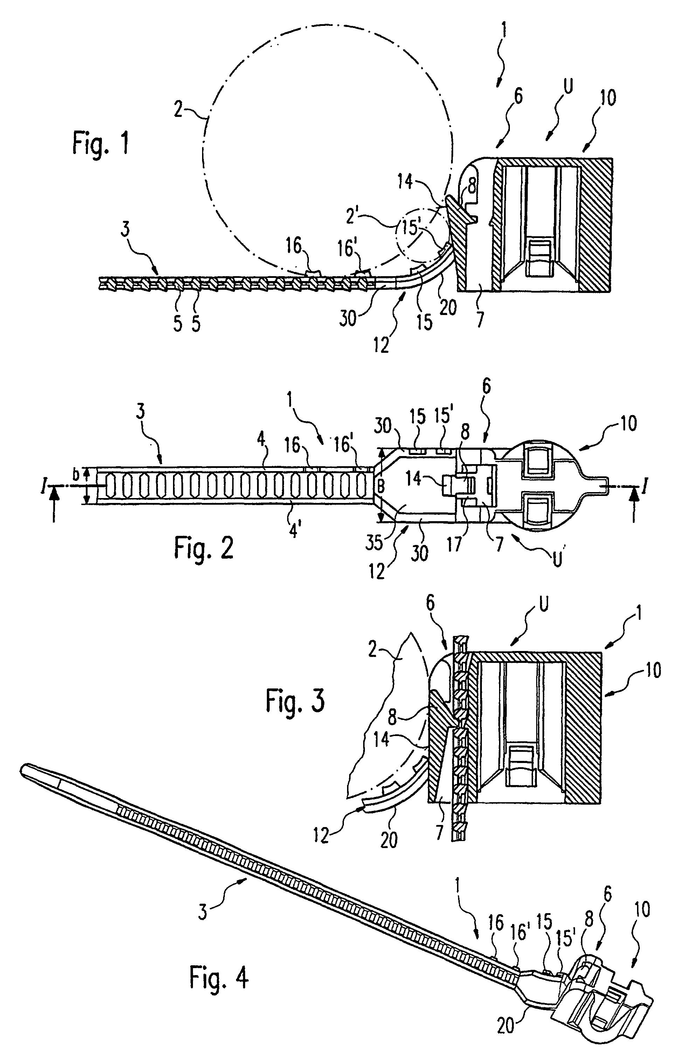

In Fig. 1 ist ein erfindungsgemäßes Kunststoffhalteband 1 im Schnitt gemäß der Linie I-I nach Fig. 2 dargestellt. Dieses Kunststoffhalteband 1 dient zum Umschlingen, Haltern und Bündeln von Gegenständen, insbesondere von Rohren und Kabeln 2 bzw. 2', welche die unterschiedlichsten Durchmesser besitzen können. Diese Gegenstände sind als sog. Wellrohre ausgebildet und besitzen damit quer zur Längsrichtung über den Außenumfang verlaufende Wellungen.

Das Halteband 1 besteht im Wesentlichen aus einem profilierten Bandteil 3 mit zwei parallelen Längsstegen 4 und 4' sowie quer dazu angeordneten Sprossen 5, einem Kopfteil 6 sowie einem Halteteil 10.

Das Kopfteil 6 schließt an das Bandteil 3 an und weist innerhalb einer Durchgangsöffnung 7 ein schräg verlaufendes, federndes Verriegelungselement 8 auf, in welches nach Fig. 3 ein Teilbereich einer Sprosse 5 einlagerbar ist.

Das Halteteil 10 kann beliebig ausgebildet sein, beispielsweise zur Halterung eines Grobgewindebolzens, eines anders gestalteten Profilbolzens oder in Form eines Zapfens, welcher in eine Trägeröffnung eingreift. Das Kopfteil 6 und das Halteteil 10 bilden vorzugsweise eine gemeinsame Baueinheit U.

Zum Haltern des sog. Wellrohres 2 bzw. 2' ist ein zwischen dem Kopfteil 6 und dem Bandteil 3 liegender Bereich 12 des Haltebandes 1 mit mindestens einem in einer Ausnehmung der Wellung einlagerbaren Haltenocken 15 versehen. Bei der in der Zeichnung dargestellten Ausführungsform liegen zwei Haltenocken 15 und 15' im Abstand nebeneinander im Bereich 12, welcher als Wölbung 20 ausgebildet ist. Diese Wölbung 20 ist gegen den zu halternden Gegenstand 2 bzw. 2' gerichtet und weist nach Fig. 2 eine Breite B auf, welche größer als die Breite b des Bandteils 3 ist.

Es können zwei Stege 30 und 30' vorgesehen sein, wobei mindestens einer dieser Stege die Haltenocken 15 und 15' aufweist. Der Zwischenraum 35 zwischen diesen gewölbten Stegen 30 und 30' kann durchbrochen oder mit einer nicht näher dargestellten Filmhaut versehen sein.

Aus Fig. 2 und 4 geht hervor, dass sich die Haltenocken 15 und 15' an einer Seite der Wölbung 20 befinden. Weiterhin besteht die Möglichkeit, dass das Bandteil 3 in dem an die Wölbung 20 angrenzenden Bereich mindestens einen weiteren Haltenocken - bei dem vorliegenden Ausführungsbeispiel zwei Haltenocken 16 und 16' - aufweisen kann. Hierbei sind die Haltenocken 15 und 15' der Wölbung 20 und die Haltenocken 16 und 16' des Bandteils 3 auf der selben Seite des Halteelements 1 angeordnet.

Aus Fig. 1 ist ersichtlich, dass sich die Wölbung 20 unterhalb der von dem zu halternden Gegenstand 2 bzw. 2' beaufschlagbaren Rückseite 14 des Verriegelungselements 8 an das Kopfteil 6 anschließt. Gemäß Fig. 2 ist das federnde Verriegelungselement 8 in einer Ausnehmung 17 des Kopfteils 6 angeordnet.

Wird nun ein zu halternder, als Wellrohr ausgebildeter Gegenstand 2 bzw. 2' auf den oberen Bereich des Bandteils 3 gelegt, lässt sich dieser so umschlingen, dass das Bandteil von oben in die Durchgangsöffnung 7 einschiebbar ist. Nach Festzurren des Bandteils 3 wird durch den Außenumfang des Wellrohres 2 bzw. 2' das federnde Verriegelungselement 8 aus der Position nach Fig. 1 in die Position nach Fig. 3 gedrückt, wodurch die vordere Nase des Verriegelungselements 8 einen Teilbereich der betreffenden Sprosse 5' übergreift und hier eingelagert ist. Damit befindet sich das Bandteil 3 in einer funktionssicheren Schließstellung, wobei in dieser Stellung die Haltenocken 15 und 15' und/oder 16 und 16' den Außenumfang des Wellrohres 2 bzw. 2' beaufschlagen und dieses damit in Längsrichtung verschiebesicher an dem Halteband 1 befestigen.

Durch das Zusammenwirken der Haltenocken 15 und 15' mit dem federnden Verriegelungselement 8 (mit Hilfe des Wellrohres 2 bzw. 2') wird eine einwandfreie, verschiebesichere Halterung des betreffenden Gegenstandes über das erfindungsgemäße Halteband erzielt. Damit ist auf einfache Weise eine hohe Funktionssicherheit gewährleistet, was insbesondere auf dem Gebiet der Kraftfahrzeugindustrie sehr wesentlich ist.

## Patentansprüche

1. Kunststoffhalteband (1) zum Umschlingen, Haltern und Bündeln von Gegenständen, insbesondere von Rohren und Kabeln (2; 2'),
mit einem profilierten Bandteil (3) mit zwei parallelen Längsstegen (4, 4') und quer dazu angeordneten Sprossen (5),
mit einem an das Bandteil (3) anschließenden Kopfteil (6), welches innerhalb einer Durchgangsöffnung (7) ein schräg verlaufendes, federndes Verriegelungselement (8) aufweist, in welches mindestens ein Teilbereich einer Sprosse (5') einlagerbar ist und
mit einem mit einem Träger verbindbaren Halteteil (10),
**dadurch gekennzeichnet,**
**dass** zum Haltern mindestens eines Gegenstandes, welcher quer zur Längsrichtung über den Außenumfang gewellt ist, ein zwischen dem Kopfteil (6) und dem Bandteil (3) liegender Bereich (12) mit mindestens einem in einer Ausnehmung der Wellung einlagerbaren Haltenocken (15, 15') versehen ist und
**dass** in Schließstellung des Haltebandes (1) das in den Bereich des zu halternden Gegenstandes ragende Verriegelungselement (8) mit seiner Rückseite (14) von diesem beaufschlagt und in eine den Teilbereich der eingelagerten Sprosse (5') sperrende Stellung bewegt ist.

2. Halteband nach Anspruch 1,
**dadurch gekennzeichnet,**
**dass** der zwischen dem Bandteil (3) und dem Kopfteil (6) liegende Bereich (12) mit einer zum gehaltenen Gegenstand (2; 2') gerichteten Wölbung (20) versehen ist.

3. Halteband nach Anspruch 2,
**dadurch gekennzeichnet,**
**dass** die Wölbung (20) eine größere Breite (B) als die (b) des Bandteils (3) aufweist.

4. Halteband nach Anspruch 1 bis 3,
**dadurch gekennzeichnet,**
**dass** zwei Haltenocken (15, 15') nebeneinander im Bereich (12) der Wölbung (20) vorgesehen sind.

5. Halteband nach Anspruch 4,
**dadurch gekennzeichnet,**
**dass** sich die Haltenocken (15, 15') an einer Seite der Wölbung (20) befinden.

6. Halteband nach einem oder mehreren der vorhergehenden Ansprüche,
**dadurch gekennzeichnet,**
**dass** das Bandteil (3) in dem an die Wölbung (20) angrenzenden Bereich mindestens einen weiteren Haltenocken (16, 16') aufweist.

7. Halteband nach Anspruch 5 und 6,
**dadurch gekennzeichnet,**
**dass** die Haltenocken (15, 15') der Wölbung (20) und die Haltenocken (16, 16') des Bandteils (3) auf der selben Seite des Haltebandes (1) angeordnet sind.

8. Halteband nach einem oder mehreren der vorhergehenden Ansprüche,
**dadurch gekennzeichnet,**
**dass** die Wölbung (20) unterhalb der von dem zu halternden Gegenstand beaufschlagbaren Rückseite (14) des Verriegelungselements (8) an das Kopfteil (6) anschließt.

9. Halteband nach einem oder mehreren der vorhergehenden Ansprüche,
**dadurch gekennzeichnet,**
**dass** das Verriegelungselement (8) in einer Ausnehmung (17) des Kopfteils (6) angeordnet ist.

10. Halteband nach einem oder mehreren der vorhergehenden Ansprüche,
**dadurch gekennzeichnet,**
**dass** das Kopfteil (6) und das Halteteil (10) eine gemeinsame Baueinheit (U) bilden

11. Halteband nach Anspruch 10,
**dadurch gekennzeichnet,**
**dass** das Halteteil (10) zur Aufnahme eines Grobgewindebolzens ausgebildet ist.

## Claims

1. Plastic retaining strap (1) for wrapping around, securing and bundling objects, in particular pipes and cables (2; 2'),
having a profiled strap part (3) with two parallel longitudinal webs (4, 4') and crosspieces (5) arranged transversely thereto,
having a head part (6) which adjoins the strap part (3) and, within a through-passage opening (7), has an obliquely running, resilient locking element (8) in which at least a sub-region of a crosspiece (5') may be accommodated, and
having a retaining part (10) which can be connected to a carrier,
**characterized**
**in that**, in order to secure at least one object which is corrugated over the outer circumference in a direction transverse to the longitudinal direction, a region (12) which is located between the head part (6) and the strap part (3) is provided with at least one retaining protuberance (15, 15') which can be accommodated in a recess of the corrugation, and
**in that**, in the closed position of the retaining strap (1), the locking element (8), which projects into the region of the object which is to be secured, has its rear side (14) subjected to the action of said object and is moved into a position in which the sub-region of the accommodated crosspiece (5') is blocked.

2. Retaining strap according to Claim 1,
**characterized**
**in that** the region (12), which is located between the strap part (3) and the head part (6), is provided with a curvature (20) in the direction of the object (2; 2') retained.

3. Retaining strap according to Claim 2,
**characterized**
**in that** the width (B) of the curvature (20) is greater than that (b) of the strap part (3).

4. Retaining strap according to Claims 1 to 3,
**characterized**
**in that** two retaining protuberances (15, 15') are provided one beside the other in the region (12) of the curvature (20).

5. Retaining strap according to Claim 4,
**characterized**
**in that** the retaining protuberances (15, 15') are located on one side of the curvature (20).

6. Retaining strap according to one or more of the preceding claims, **characterized**
**in that** the strap part (3) has at least one further retaining protuberance (16, 16') in the region adjacent to the curvature (20).

7. Retaining strap according to Claims 5 and 6,
**characterized**
**in that** the retaining protuberances (15, 15') of the curvature (20) and the retaining protuberances (16, 16') of the strap part (3) are arranged on the same side of the retaining strap (1).

8. Retaining strap according to one or more of the preceding claims, **characterized**
**in that** the curvature (20) adjoins the head part (6) beneath the rear side (14) of the locking element (8), it being possible for said rear side to be subjected to the action of the object which is to be secured.

9. Retaining strap according to one or more of the preceding claims, **characterized**
**in that** the locking element (8) is arranged in a cutout (17) of the head part (6).

10. Retaining strap according to one or more of the preceding claims, **characterized**
**in that** the head part (6) and the retaining part (10) form a common structural unit (U).

11. Retaining strap according to Claim 10,
**characterized**
**in that** the retaining part (10) is designed for accommodating a coarse-thread bolt.

## Revendications

1. Ruban de serrage en matière plastique (1) pour le cerclage, la fixation et le bottelage d'objets, en particulier de tuyaux ou de câbles (2 ; 2'), comportant
une partie de ruban profilée (3) présentant deux moulures longitudinales parallèles (4, 4') et des traverses (5) agencées perpendiculairement à celles-ci,
une partie de tête (6) qui se raccorde à la partie de ruban (3) et qui comprend à l'intérieur d'une ouverture de passage (7) un élément de verrouillage (8) oblique et élastique dans lequel peut venir se poser au moins une zone partielle d'une traverse (5'), et
une partie de serrage (10) susceptible d'être reliée à un support,
**caractérisé en ce que**
pour la fixation d'au moins un objet qui est ondulé sur la périphérie extérieure perpendiculairement à la direction longitudinale, une zone (12) située entre la partie de tête (6) et la partie de ruban (3) est pourvue d'au moins une came de serrage (15, 15') susceptible de venir se poser dans un évidement de l'ondulation, et
**en ce que** dans la position de fermeture du ruban de serrage (1), l'élément de verrouillage (8) qui se projette dans la région de l'objet à serrer est sollicité sur son côté arrière (14) par celui-ci et est déplacé dans une position condamnant la zone partielle de la traverse posée (5').

2. Ruban de serrage selon la revendication 1, **caractérisé en ce que** la zone (12) située entre la partie de ruban (3) et la partie de tête (6) est pourvue d'un bombement (20) dirigé vers l'objet serré (2 ; 2').

3. Ruban de serrage selon la revendication 2, **caractérisé en ce que** le bombement (20) présente une largeur (B) supérieure à celle (b) de la partie de ruban (3).

4. Ruban de serrage selon les revendications 1 à 3, **caractérisé en ce qu'**il est prévu deux cames de serrage (15, 15') l'une à côté de l'autre dans la zone (12) du bombement (20).

5. Ruban de serrage selon la revendication 4, **caractérisé en ce que** les cames de serrage (15, 15') se situent sur un côté du bombement (20).

6. Ruban de serrage selon l'une ou plusieurs des revendications précédentes, **caractérisé en ce que** la partie de ruban (3) comprend dans la zone adjacente au bombement (20) au moins une autre came de serrage (16, 16').

7. Ruban de serrage selon les revendications 5 et 6, **caractérisé en ce que** les cames de serrage (15, 15') du bombement (20) et les cames de serrage (16, 16') de la partie de ruban (3) sont agencées sur le même côté du ruban de serrage (1).

8. Ruban de serrage selon l'une ou plusieurs des revendications précédentes, **caractérisé en ce que** le bombement (20) se raccorde à la partie de tête (6) au-dessous du côté arrière (14), sollicité par l'objet à serrer, de l'élément de verrouillage (8).

9. Ruban de serrage selon l'une ou plusieurs des revendications précédentes, **caractérisé en ce que** l'élément de verrouillage (8) est agencé dans un évidement (17) de la partie de tête (6).

10. Ruban de serrage selon l'une ou plusieurs des revendications précédentes, **caractérisé en ce que** la partie de tête (6) et la partie de serrage (10) forment une unité structurelle commune (U).

11. Ruban de serrage selon la revendication 10, **caractérisé en ce que** la partie de serrage (10) est réalisée pour recevoir un boulon à filetage grossier.
